# EUROPÄISCHE PATENTSCHRIFT

(11) **EP 2 376 322 B1**
(45) Veröffentlichungstag und Bekanntmachung des Hinweises auf die Patenterteilung: **31.10.2012**
(21) Anmeldenummer: 09765089.9
(22) Anmeldetag: 03.12.2009
(51) Int. Cl.: B62D 5/04, H02K 11/00

(54) **LEISTUNGSEINHEIT FÜR EIN ELEKTRISCHES LENKSYSTEM**
POWER UNIT FOR AN ELECTRICAL STEERING SYSTEM
UNITÉ DE PUISSANCE POUR SYSTÈME DE DIRECTION ÉLECTRIQUE

(30) Priorität: 13.01.2009 DE 102009000169
(43) Veröffentlichungstag der Anmeldung: 19.10.2011
(73) Patentinhaber: ZF-Lenksysteme GmbH, 73527 Schwäbisch Gmünd (DE)
(72) Erfinder: KNÖDLER, Andreas, 73574 Iggingen (DE); WALZ, Stefan, 73529 Schwäbisch Gmünd (DE); EBERHARDT, Harald, 70374 Stuttgart (DE); CAPKIN, Faruk, 73529 Schwäbisch Gmünd (DE)
(86) Internationale Anmeldenummer: PCT/EP2009/066304
(87) Internationale Veröffentlichungsnummer: WO 2010/081594

(56) Entgegenhaltungen:
- DE-A1-102007 014 645
- JP-A- 2008 184 043

## Beschreibung

Die Erfindung betrifft eine Leistungseinheit für ein elektrisches Lenksystem, ein Verfahren zum Zusammenbauen einer solchen Leistungseinheit und eine Fügevorrichtung für eine Leistungseinheit.

Bei elektrischen Lenksystemen wird mit Hilfe einer Leistungseinheit bzw. eines Powerpacks, die eine Einheit aus Motor und Steuergerät darstellt, ein Unterstützungsmoment erzeugt. Dabei entsteht im Steuergerät (ECU) viel Wärme durch Schalt- und Durchgangsverluste, insbesondere in deren Endstufe. Die Endstufe ist üblicherweise aus Leistungshalbleitern aufgebaut, deren maximale Sperrschichttemperatur nicht überschritten werden darf, um die Endstufe vor Beschädigungen zu schützen. Außerdem wird das Steuergerät über den Motor entwärmt. Der Wärmefluss erfolgt dabei von der Endstufe über eine Grundplatte und den Motorflansch in das Motorgehäuse.

Die größte Wärmeabgabe der Endstufe tritt typischerweise zeitlich immer nur sehr kurz, d.h. einige Sekunden, auf. Daher ist eine besonders gute Entwärmung lokal an der Endstufe notwendig, damit die Wärme durch kurzzeitig hohe Verlustleistung möglichst schnell abfließen kann und die Grundtemperatur der Grundplatte möglichst tief ist. Aus diesem Grund ist ein möglichst geringer thermischer Widerstand am Motorflansch notwendig.

Es ist bekannt, das Steuergerät auf das Motorgehäuse aufzuschrauben. Bei einer Verschraubung von Steuergerät und Motor gemäß dem Stand der Technik erfolgt die Erwärmung nur lokal an den Schraubstellen, d.h. den Pressflächen der Verschraubung. Die elektrische Verbindung von Motor und Steuergerät erfolgt üblicherweise über Steckkontakte.

Aus der Druckschrift DE 10 2007 014645 A1 ist eine elektrische Baugruppe für eine elektrische Lenkhilfe bekannt. Die Druckschrift zeigt eine Leistungseinheit für ein elektrisches Lenksystem mit einem Motor und einem Steuergerät, wobei das Steuergerät mittels Press-Sitz mit dem Motor verbunden ist.

Bei der vorgestellten Leistungseinheit für ein elektrisches Lenksystem mit einem Motor und einem Steuergerät ist vorgesehen, dass das Steuergerät mittels Schrumpfsitz mit dem Motor verbunden ist. Somit entfällt der Schraubvorgang.

Dieser Schrumpfsitz sichert eine große Auflagefläche zwischen Steuergerät und Motor und ein sattes bzw. festes Drücken der anliegenden Flächen gegeneinander. Auf diese Weise ist ein guter Wärmeübergang zwischen dem Steuergerät und dem Motor gewährleistet.

In Ausgestaltung ist das Steuergerät mit einem Gehäuse des Motors verbunden. Dieses Motorgehäuse weist üblicherweise eine Ausformung, wie bspw. einen umlaufenden Flansch, auf, in die das Steuergerät eingesetzt werden kann. Auf diese Weise ist das Steuergerät fest mit dem Motorgehäuse und somit mit dem Motor verbunden.

Bei der Leistungseinheit kann vorgesehen sein, dass das Gehäuse des Motors aus einem Aluminiumdruckguss bestehen. Dieses Material bietet sich aufgrund seiner guten Wärmeleiteigenschaften und der guten Verarbeitbarkeit an.

Weiterhin kann das Steuergerät eine Grundplatte umfassen. Auf dieser ist dann üblicherweise eine Endstufe des Steuergeräts, die vornehmlich Wärme erzeugt, angeordnet. In diesem Fall ist die Grundplatte des Steuergeräts typischerweise direkt mit dem Motor bzw. mit dessen Gehäuse verbunden. Die von der Endstufe erzeugte Wärme wird dann über die Grundplatte des Steuergeräts auf den Motor bzw. auf das Motorgehäuse übertragen.

Das vorgestellte Verfahren dient zum Zusammenbauen bzw. Zusammenfügen einer Leistungseinheit, die einen Motor und ein Steuergerät aufweist. Das Verfahren kommt dabei insbesondere beim Zusammenbauen einer Leistungseinheit der vorstehend beschriebenen Art zum Einsatz. Dabei wird eine Verbindung zwischen dem Steuergerät und dem Motor mittels Schrumpfsitz realisiert.

Vor dem Zusammenfügen von Motor und Steuergerät kann eine Temperaturdifferenz zwischen dem Motor und dem Steuergerät bewirkt werden.

Diese Temperaturdifferenz wird bei einer Ausführung des Verfahrens durch zumindest abschnittsweises Erwärmen des Motors bewirkt. So kann bspw. das Gehäuse des Motors, wenn dieses mit dem Steuergerät verbunden wird, erwärmt werden. Umfasst das Steuergerät eine Grundplatte, so wird typischerweise diese mit dem Motorgehäuse verbunden. Dabei wird durch Erwärmen des Motors erreicht, dass diese die Grundplatte aufnehmen kann. Nach Abkühlen des Motorgehäuses ergibt sich der Schrumpfsitz.

Grundsätzlich ist es auch möglich, das Steuergerät abzukühlen.

Zum Erwärmen des Motors kann eine Induktionsspule verwendet werden. Mit dieser kann der Motor bzw. die Abschnitte des Motors, die zu temperieren sind, berührungsfrei erwärmt werden.

Der Motor bzw. das Gehäuse des Motors kann auf 90° bis 180° C, bspw. auf 120° C, erwärmt werden. Diese Temperatur ist abhängig von den Ausmaßen von Motor und Steuergerät.

Die vorgestellte Fügevorrichtung für eine Leistungseinheit eines elektrischen Lenksystems mit einem Motor und einem Steuergerät dient insbesondere für eine Leistungseinheit der vorstehend beschriebenen Art. Diese umfasst eine erste Aufnahme für den Motor, eine zweite Aufnahme für das Steuergerät und eine Bewegungseinrichtung zum Verändern des Abstands zwischen den beiden Aufnahmen. Weiterhin ist eine Temperiereinrichtung zum Bewirken einer Temperaturdifferenz zwischen dem Motor und dem Steuergerät vorgesehen.

Mit der Bewegungseinrichtung kann dann bspw. die Aufnahme für das Steuergerät und/oder die Aufnahme für den Motor bewegt werden, d.h. diese werden für den Fügevorgang aufeinander zubewegt.

In Ausgestaltung kann zusätzlich ein Temperaturfühler, beispielsweise ein Pyrometer, vorgesehen sein. Mit diesem kann eine kontaktlose Temperaturmessung durchgeführt werden. Vor dem Fügevorgang kann eine Temperaturmessung durchgeführt werden, um dann in Abhängigkeit der Ausgangstemperatur eine Temperatursteuerung vorzunehmen. Selbstverständlich kann auch eine Temeraturregelung vorgesehen sein.

Als Temperiereinrichtung kann eine Induktionsanlage dienen.

Weitere Vorteile und Ausgestaltung der Erfindung ergeben sich aus der Beschreibung und der beiliegenden Zeichnung.

Es versteht sich, dass die voranstehend und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung dargestellt und wird im folgenden unter Bezugnahme auf die Zeichnung ausführlich beschrieben.
- Figur 1: zeigt in schematischer Darstellung der Ausführungsform der erfindungsgemäßen Leistungseinheit.
- Figur 2: zeigt eine Ausführung der Aufnahme für das Steuergerät.
- Figur 3: zeigt einen Ausschnitt aus einer Fügevorrichtung.

Die Darstellung zeigt eine Ausführungsform einer Leistungseinheit, die insgesamt mit der Bezugsziffer 10 bezeichnet ist. Es ist ein Gehäuse 12 eines nicht weiter dargestellten Motors zu erkennen, der in einem elektrischen Lenksystem zum Einsatz kommt. Dieses Motorgehäuse 12 weist einen nach oben ragenden Flansch 14 auf, der von oben betrachtet in sich geschlossen und somit kreisförmig verläuft.

In das Motorgehäuse 14 eingesetzt ist ein Steuergerät 16 mit einer Grundplatte 18 und einer darauf befindlichen Endstufe 20. Diese Grundplatte 18 ist in das Motorgehäuse 12 eingesetzt und mittels Schrumpfsitz mit diesem verbunden. Im Betrieb erzeugt die Endstufe 20 Wärme und gibt diese, wie Pfeil 21 verdeutlicht, an das Motorgehäuse 12 ab.

Die Grundplatte 18 des Steuergeräts 16 ist so dimensioniert, dass diese einen größeren Durchmesser als das Motorgehäuse 12 im Bereich des Flansches 14 hat. Hierbei bietet es sich an, den Durchmesser der Grundplatte 18 etwa 0,03 bis 0,1 mm größer als den Durchmesser des Motorgehäuses zu dimensionieren. Vor Einsetzen der Grundplatte 18 in das Motorgehäuse 12 wird das Motorgehäuse erwärmt, bspw. auf 120°C, so dass sich das Motorgehäuse 12 ausdehnt und damit der Durchmesser des Motorgehäuses 12 sich im Bereich des Flansches 14 erweitert. Dann wird die Grundplatte 18 in das erweiterte Motorgehäuse 12 eingesetzt. Bei dem anschließenden Abkühlen verringert sich der Durchmesser des Motorgehäuses 12 und drückt sich fest an die Grundplatte 18 des Steuergeräts 16, wodurch der Schrumpfsitz realisiert wird.

Bei einem Schrumpfsitz zwischen der Grundplatte 18 des Steuergeräts und dem Motorflansch 14 vergrößert sich die Pressfläche um ein Vielfaches. Der thermische Widerstand von dem Steuergerät 16 zum Motor bei einem Schrumpfsitz wird durch den hohen und großflächigen Anpressdruck im Schrumpfsitz deutlich geringer als bei einer herkömmlichen Verschraubung. Somit kann bei Verwendung eines Schrumpfsitzes die Wärme von der Endstufe 20 sehr gut abgeführt werden. Dadurch wird auch die Grundtemperatur der Grundplatte 18 sehr niedrig gehalten.

Aufgrund der großen Masse des Motors verglichen mit der dem Steuergerät 16 stellt der Motor eine große thermische Kapazität dar, die in der Lage ist, kurzzeitig sehr große Wärmemengen aus dem Steuergerät 16 aufzunehmen. Um die Wärmekapazität des Motors effektiv nutzen zu können, ist ein möglichst geringer thermischer Übergang von dem Steuergerät 16 zum Motor Voraussetzung, der durch den Schrumpfsitz realisiert wird.

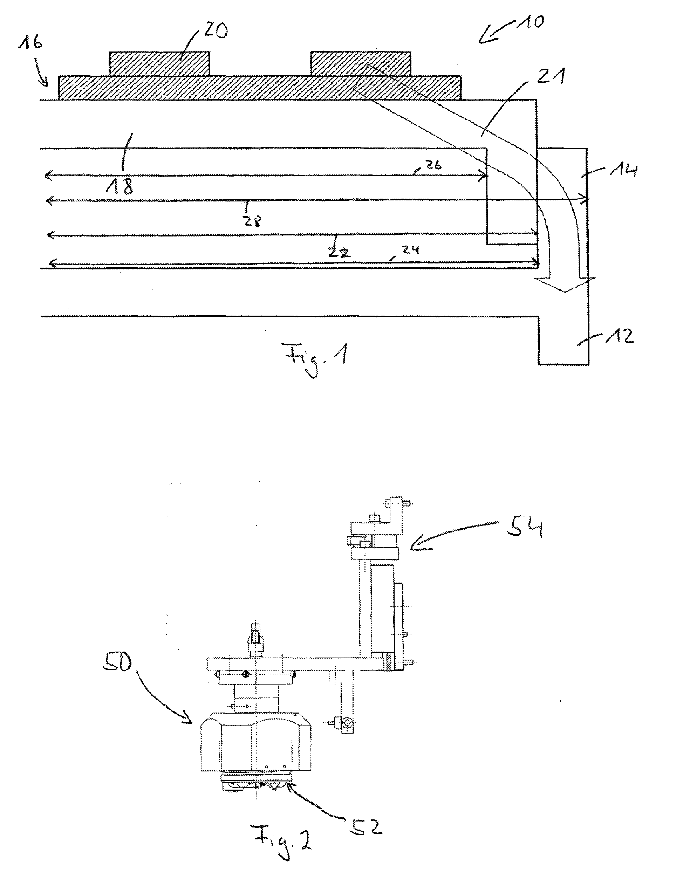

Figur 1 zeigt eine Ausführung, bei der der Außendurchmesser 22 der Grundplatte 18 des Steuergeräts größer als der Innendurchmesser 24 des Motorgehäuses 12 ist. Durch Erwärmen des Motorgehäuses 12 wird erreicht, dass die Grundplatte 18 des Steuergeräts innerhalb des umlaufenden Flansches 18 des Motorgehäuses 12 eingesetzt werden kann. Ein anschließendes Abkühlen des Motorgehäuses bewirkt den Schrumpfsitz.

Selbstverständlich ist es auch möglich, das Motorgehäuse 12 und die Grundplatte 18 derart zu gestalten, dass das Motorgehäuse 12 in die Grundplatte 18 des Steuergeräts eingesetzt werden kann und somit umgekehrt zur Ausführung in Figur 1 ist. In diesem Fall wird der Innendurchmesser 26 der Grundplatte 18 durch Erwärmen größer als der Außendurchmesser 28 des Motorgehäuses 12 und kann auf dieses aufgesetzt werden. Das abschließende Abkühlen der Grundplatte 18 bewirkt dann den Schrumpfsitz.

In Figur 2 ist eine Aufnahme 50 für ein Steuergerät 52 als Komponente der erfindungsgemäßen Fügevorrichtung dargestellt. Diese Aufnahme umfasst eine den Abmessungen des Steuergeräts bzw. der Grundplatte des Steuergeräts 52 angepasst Form, so dass dieses sicher in der Aufnahme 50 gehalten werden kann.

Weiterhin ist eine Bewegungseinrichtung 54 dargestellt, mit der die Aufnahme 50 in vertikaler Richtung zu bewegen ist.

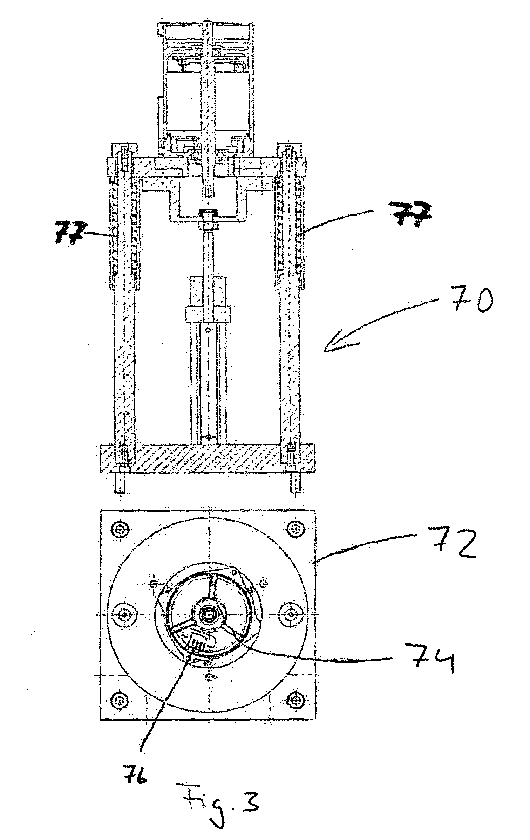

In Figur 3 ist ein Ausschnitt aus einer Fügevorrichtung, insgesamt mit der Bezugsziffer 70 bezeichnet, dargestellt. Zu erkennen ist eine Aufnahme 72 für einen Motor 74, an dessen Unterseite Pins 76 für einen elektrischen Kontakt vorgesehen sind. Weiterhin sind Führungsstangen 77 vorgesehen, mit denen die Aufnahme 72 für den Motor 74 in horizontaler Richtung zu verfahren ist.

Nachfolgend wird eine Beschreibung einer möglichen Funktionsweise der Fügevorrichtung gegeben:

Zunächst wird der Motor in die Motoraufnahme eingelegt. Um diesen radial und axial zum Steuergerät bzw. dessen Grundplatte auszurichten, wird er über den Außendurchmesser am A-Lagerflansch in der Motoraufnahme aufgenommen.

In einem nächsten Schritt wird die Grundplatte bzw. der ECU-Deckel in die Aufnahme für das Steuergerät von Hand eingesetzt. Eine Verdrehsicherung beim Einlegen erfolgt über die Geometrie des ECU-Deckels. Kugelgefederte Wurmschrauben halten den ECU-Deckel in der Aufnahme und ermöglichen der Aufnahme nach dem Fügen ein fast kraftloses Ausfahren aus dem ECU-Deckel. Um die Winkelpositionierung vom Motor auf die ECU-Aufnahme weiterzuleiten, ist die Aufnahme auf eine Position federvorzentriert. Diese Federn geben zusätzlich den notwendigen Spielraum, um den Pinpaaren während des Fügens eine gegenseitige Ausrichtmöglichkeit zur Findung zu ermöglichen.

Die Federvorzentrierung wird bei der nächsten Design Anpassung (bewegliches busbar cover = Halterung der Motorenpins) stellungsgebunden fixiert, so dass der busbar die Ausgleichsbewegung ausführen muss, um eine immer gleich bleibende Position vom Motor zum ECU-Deckel zu erzeugen. Diese ist für die weitere Montage/Prüfung des Power Pack notwendig. Ein federzentrierter Kulissenstein, der fest mit der ECU-Deckel Aufnahme verschraubt ist, dient zum Ausgleich axialer Fluchtungsfehler (X/Y-Achse) und zur Zentrierung des Motors zu dem ECU-Deckel. Fluchtungsfehler entstehen aufgrund der Summentoleranzen bei der Fertigung und Montage von Motor und ECU-Deckel. Über die Anfasung am Passsitz wird die X/Y-Zentrierung des ECU-Deckels zum Motor über den gefederten Kulissenstein ermöglicht.

Ab hier übernimmt nun die Maschine vollautomatisch das Fügen, sobald der Bediener die Starttasten drückt und die Lichtschranke freigibt.

Dann wird der Motor über einen Zylinder etwas oberhalb der Induktor-Kante gefahren. Diese Position ist durch Versuche festgelegt worden.

Dann wird der ECU-Deckel im Eilgang oberhalb der Motorkante auf einen Abstand, bei dem eine Beschädigung der elektronischen Bauteile durch die Induktivität während der Erwärmung ausgeschlossen ist, gefahren.

Anschließend werden Temperaturfühler an den temperaturrelevanten Stellen am Motor angelegt. Evtl. können auch Pyrometer eingesetzt werden.

Die Temperaturfühler dienen dazu sicherzustellen, dass eine ausreichende Ausdehnung erfolgt, um kraftlos fügen zu können, und dass durch Überhitzung keine Beschädigungen entstehen.

Die Induktionsanlage erwärmt über verschiedene Stufen (Sollwert- und Zeitparameter beim Pyrometer-Einsatz regelt dieser die Sollwerte) den Fügebereich des Motors, der sich ausdehnt und eine kraftlose Fügung ermöglicht. Die kraftlose Fügung ist notwendig, um den Pinpaaren die Möglichkeit zu geben, sich ohne Zwang zu finden. Nachdem die Pinpaare die Findung abgeschlossen haben, kontaktiert der Dichtring den Fügebereich.

Um eine Beschädigung der Teile beim auf Block fahren zu verhindern, wird die parametrierbare Abschaltung der Einfahrkraft über einen Kraftsensor überwacht und bei Erreichen die Achse angehalten. Die Fügeendlage wird durch ein parametrierbares Weg/Kraft-Fenster überwacht und bewertet.

Sobald der Fügebereich unter eine parametrierbare Temperatur gefallen ist und die Soll/Ist-Bewertung in Ordnung war, fährt die Anlage in Grundstellung und die gefügten Teile können entnommen werden. Ansonsten muss der Bediener zum Entnehmen der gefügten Teile erst eine Fehlermeldung quittieren.

## Patentansprüche

1. Leistungseinheit für ein elektrisches Lenksystem mit einem Motor (74) und einem Steuergerät (16, 52), **dadurch gekennzeichnet, dass**
das Steuergerät (16, 52) mittels Schrumpfsitz mit dem Motor (74) verbunden ist.

2. Leistungseinheit nach Anspruch 1, bei der das Steuergerät (16, 52) mit einem Gehäuse (12) des Motors (74) verbunden ist.

3. Leistungseinheit nach Anspruch 2, bei der das Gehäuse (12) aus einem Aluminiumdruckguss besteht.

4. Leistungseinheit nach einem der Ansprüche 1 bis 3, bei der das Steuergerät (16, 52) eine Grundplatte (18) umfasst.

5. Leistungseinheit nach Anspruch 4, bei der auf der Grundplatte (18) eine Endstufe (20) des Steuergeräts (16) angeordnet ist.

6. Verfahren zum Zusammenbauen einer Leistungseinheit (10) mit einem Motor (74) und einem Steuergerät (16, 52), insbesondere einer Leistungseinheit (10) nach einem der Ansprüche 1 bis 5, **dadurch gekennzeichnet, dass**
eine Verbindung zwischen dem Steuergerät (16, 52) und dem Motor (74) mittels Schrumpfsitz realisiert wird.

7. Verfahren nach Anspruch 6, bei dem vor Zusammenfügen von Motor (74) und Steuergerät (16, 52) eine Temperaturdifferenz zwischen dem Motor (74) und dem Steuergerät (16, 52) bewirkt wird.

8. Verfahren nach Anspruch 7, bei dem die Temperaturdifferenz durch zumindest abschnittsweises Erwärmen des Motors (74) bewirkt wird.

9. Verfahren nach Anspruch 8, bei dem eine Induktionsspule zum Erwärmen des Motors (74) verwendet wird.

10. Verfahren nach Anspruch 8 oder 9, bei dem der Motor (74) auf 90° bis 180° C erwärmt wird.

11. Fügevorrichtung einer Leistungseinheit nach einem der Ansprüche 1 bis 5 eines elektrischen Lenksystems mit einem Motor (74) und einem Steuergerät (16, 52), mit
einer ersten Aufnahme (72) für den Motor (74),
einer zweiten Aufnahme (50) für das Steuergerät (16, 52), einer Bewegungseinrichtung (54) zum Verändern des Abstands zwischen den beiden Aufnahmen, **dadurch gekennzeichnet, dass** eine Temperiereinrichtung zum Bewirken einer Temperaturdifferenz zwischen dem Motor (74) und dem Steuergerät (16, 52) vorgesehen ist.

12. Fügevorrichtung nach Anspruch 11, bei der zusätzlich ein Temperaturfühler vorgesehen ist.

13. Fügevorrichtung nach Anspruch 11 oder 12, bei der als Temperiereinrichtung eine Induktionsanlage dient.

## Claims

1. Power unit for an electric steering system having a motor (74) and a controller (16, 52), **characterized in that**
the controller (16, 52) is connected to the motor (74) by means of a shrink fit.

2. Power unit according to Claim 1, in which the controller (16, 52) is connected to a housing (12) of the motor (74).

3. Power unit according to Claim 2, in which the housing (12) is composed of a die-cast aluminium.

4. Power unit according to one of Claims 1 to 3, in which the controller (16, 52) comprises a base plate (18).

5. Power unit according to Claim 4, in which an output stage (20) of the controller (16) is arranged on the base plate (18).

6. Method for assembling a power unit (10) having a motor (74) and a controller (16, 52), in particular a power unit (10) according to one of Claims 1 to 5, **characterized in that**
a connection between the controller (16, 52) and the motor (74) is realized by means of a shrink fit.

7. Method according to Claim 6, in which a temperature difference between the motor (74) and the controller (16, 52) is created before the motor (74) and the controller (16, 52) are assembled.

8. Method according to Claim 7, in which the temperature difference is created by heating the motor (74) at least in sections.

9. Method according to Claim 8, in which an induction coil is used for heating the motor (74).

10. Method according to Claim 8 or 9, in which the motor (74) is heated to from 90° to 180°C.

11. Joining apparatus of a power unit according to one of Claims 1 to 5 of an electric steering system having a motor (74) and a controller (16, 52), having a first holder (72) for the motor (74),
a second holder (50) for the controller (16, 52),
a movement device (54) for changing the distance between the two holders, **characterized in that**
a temperature-control device for creating a temperature difference between the motor (74) and the controller (16, 52) is provided.

12. Joining apparatus according to Claim 11, in which a temperature sensor is additionally provided.

13. Joining apparatus according to Claim 11 or 12, in which an induction system is used as the temperature-control device.

## Revendications

1. Unité de puissance pour système de direction électrique dotée d'un moteur (74) et d'un appareil de commande (16, 52), **caractérisée en ce que** l'appareil de commande (16, 52) est relié au moteur (74) par le biais d'un siège rétractable.

2. Unité de puissance selon la revendication 1, dans laquelle l'appareil de commande (16, 52) est relié à un carter (12) du moteur (74).

3. Unité de puissance selon la revendication 2, dans laquelle le carter (12) est réalisé en fonte d'aluminium sous pression.

4. Unité de puissance selon l'une quelconque des revendications 1 à 3, dans laquelle l'appareil de commande (16, 52) comprend une plaque de fond (18).

5. Unité de puissance selon la revendication 4, dans laquelle un étage terminal (20) de l'appareil de commande (16) est disposé sur la plaque de fond (18).

6. Procédé d'assemblage d'une unité de puissance (10) dotée d'un moteur (74) et d'un appareil de commande (16, 52), notamment d'une unité de puissance (10) selon l'une quelconque des revendications 1 à 5, **caractérisé en ce qu'**une liaison est établie entre l'appareil de commande (16, 52) et le moteur (74) par le biais du siège rétractable.

7. Procédé selon la revendication 6, dans lequel une différence de température est obtenue entre le moteur (74) et l'appareil de commande (16, 52) avant le jointement du moteur (74) et de l'appareil de commande (16, 52).

8. Procédé selon la revendication 7, dans lequel la différence de température est obtenue par un réchauffement au moins partiel du moteur (74).

9. Procédé selon la revendication 8, dans lequel une bobine d'induction est utilisée pour le réchauffement du moteur (74).

10. Procédé selon la revendication 8 ou 9, dans lequel le moteur (74) est réchauffé à une température allant de 90° à 180°C.

11. Dispositif de jointement d'une unité de puissance selon l'une quelconque des revendications 1 à 5 d'un système de direction électrique, avec un moteur (74) et un appareil de commande (16, 52) équipé de :
un premier logement (72) pour le moteur (74) ;
un deuxième logement (50) pour l'appareil de commande (16, 52) ;
un dispositif de déplacement (54) permettant de modifier l'écartement entre les deux logements ;
**caractérisé en ce que** :
un dispositif de mise à température est prévu pour obtenir une différence de température entre le moteur (74) et l'appareil de commande (16, 52).

12. Dispositif de jointement selon la revendication 11, dans lequel un capteur de température est en outre prévu.

13. Dispositif de jointement selon la revendication 11 ou 12, dans lequel une installation d'induction sert de dispositif de mise à température.
